# EUROPEAN PATENT SPECIFICATION

(11) **EP 1 883 589 B1**
(45) Date of publication and mention of the grant of the patent: **22.09.2010**
(21) Application number: 06725957.2
(22) Date of filing: 18.05.2006
(51) Int. Cl.: B65D 85/57, G11B 33/04

(54) **CASE FOR A VARIABLE AMOUNT OF CD, DVD OR SIMILAR DISCS**
HÜLLE FÜR VARIABLE MENGE VON CDS, DVDS ODER ÄHNLICHEN PLATTEN
BOITIER CONCU POUR UNE QUANTITE VARIABLE DE CD, DE DVD OU DE DISQUES SIMILAIRES

(30) Priority: 23.05.2005 FI 20050541
(43) Date of publication of application: 06.02.2008
(73) Proprietor: Oy Prevex AB, 66900 Nykarleby (FI)
(72) Inventor: SJÖHOLM, Christer, FI-68600 Jakobstad (FI)
(74) Representative: Eriksson, Svante Johan Christer
(86) International application number: PCT/FI2006/050200
(87) International publication number: WO 2006/125859

(56) References cited:
- WO-A-02/29815
- GB-A- 2 243 145
- GB-A- 2 243 145
- US-A- 4 874 085
- US-A- 5 377 825
- US-A- 5 377 825
- US-A- 5 848 689
- US-A- 6 029 848
- US-A- 6 047 821
- US-A- 6 047 821
- US-A1- 2005 011 796

## Description

The invention concerns a case for a variable amount of CD, DVD or similar discs, (hereafter CD discs) comprising a container part provided with an articulately connected lid and having a central pin extending upwardly from the bottom of the container part, said central pin being intended to match into the central hole of the CD discs, said container part and central pin having a height adapted to a previously determined maximum number of CD discs, whereby the central pin of the container part is provided with a central cavity extending along the entire length of said central pin, and the inside of the lid is provided with an upper central pin intended to squeeze into the central cavity in the central pin of the container part on closing the lid and thereby to cause a radial expansion of said central pin due to cooperation between the shape of the cavity in the central pin of the container part and the shape of the mantle surface of the upper central pin.

However, there are cases at the market being capable to receive more than one CD disc, but they are often of quite a complicated construction having intermediate elements capable to receive one CD disc per side. This leads to an unproportionally high increase of the height of the case if it is dimensioned to receive a higher number of CD discs.

A case being of a construction according to the preamble is known from document US-A-6,047,821. However, this previously known structure is provided with a relatively perishable link construction between the lid and the bottom part, simultaneously as two different moulds are required for the production of said case, which also complicates the possibility to provide the case with text and pictures.

In document US-A-5,377,825 a compact disc storage case is shown being a one piece case having a lid and a side wall, which can be placed in the same plane as the bottom of the case in an open position. The storage case has a central pin extending from the bottom of the case and another central pin extending from the lid, each being intended to receive one single compact disc, but the pins are not intended to cooperate with each other.

Document WO 02/29815 A concerns a storage device for CDs manufactured in one piece, having one central pin for each CD. Also document US-A-6,029,848 concerns a CD box, the container and lid of which being hinged to each other by means of a flexible sheet fixed to the outer surfaces of said parts. No one of these documents shows cooperating central pins.

Also document GB 2 243 145 A concerns a one piece CD box intended for one single CD to be kept in place by a central pin in the container part and secured by pressure means protruding from the lid.

Document UA 4,874,085 concerns a CD storage cassette having cooperating central pins, but there is no teaching that the cassette could receive more than one CD.

The object of the present invention is to provide a case with the above mentioned problems removed and offering a simple and wear resistive construction well suitable for instance for repeated delivery of talking books, talking newsletters and talking journals to and from visually handicapped persons by mail independently of the fact if the case is completely or partly filled.

This is achieved with a case, which is characterized in that the case is an injection moulded one piece case having one side wall pivotally hinged to both the lid and to the bottom of the container part, whereby said bottom, side wall and lid can be positioned into a common plane when the case is in its open position, and that the central pin of the contained part is slotted by longitudinal slots extending to a previously determined depth above the bottom of the container part, whereby each tab between two slots is provided with internal longitudinal reinforcing ribs, said reinforcing ribs ending at a distance from the upper end of the central pin corresponding at least to the length of the upper central pin and each reinforcing rib is provided with a downwardly enlarging wedge shaped foot portion having a height extending from bottom of the container part to a level of the bottom ends of the slots.

Due to the fact that the case is in said open position also during its manufacture, it is possible during the injection moulding to provide the outside of the case, i.e. the lid, the bottom and the intermediate side wall, with a label by using a so called IML technique, In-Mould-Labelling, or by gluing. In the IML technique the label is placed at the bottom of the mould in which the case is manufactured, after which the plastics material is supplied upon the label, so that it will be moulded into the plastics material of the case. The joints between the pivotal side wall and the lid and between the said side wall and the bottom of the container part are formed in such a way that no tensile stress appears in the label being fixed over said joints, when the side wall is turned up and the lid is closed. This is achieved with a joint having a V-shaped groove at the inside of the case, said groove having a depth, which is somewhat smaller than the thickness of the wall of said case. Due to this the theoretical pivot axle in each joint is positioned outermost in a corresponding edge of the case. Hereby there is no risk that the label would be broken on closing the case.

Further the case has a shape enabling it to be provided with an outer film forming a pocket for a label or any other information, for instance name and address of the receiver and postage data or similar.

In order to secure that the lid will remain in a closed position and will not be displaced along the sidewalls of the container part., said container part and lid are provided with snap-in locks, formed at the front side of the container part and of the lid, i.e. the side opposite to the joint between the lid and the container part, either near the corners of the case or along a part or the whole front edge of the container part and of the lid. Such a construction will also improve the torsional strength of the case.

The cooperation between the lower and the upper central pin will brace the CD discs securely in place when the lid is closed, preventing movement of the CD discs along the central pin also when the case is not completely filled.

The central pin of the container part can be tubular having a circular, polygonal or astral cross section, which central pin is expandable i radial direction, either due to a small wall thickness or because it is slotted with longitudinal slots extending to a predetermined depth above the bottom of the container part.

The internal diameter at the end of the central pin of the container part and the outer diameter at the end of the upper central pin are substantially of equal size, whereby either the inner diameter in the upper end portion of the central pin of the container part or the outer diameter of the upper central pin is constant while the diameter in the cooperating central pin increases conically from the end upwards and decreases conically downwards, respectively.

According to a preferred embodiment the central pin of the container part has an inner diameter decreasing conically from the end of said pin downwards and cooperates with an upper central pin having a constant outer diameter. An embodiment wherein both cooperating surfaces are conical is also conceivable.

In order to receive a desirable stability in the central pin of the bottom part said pin can preferably be provided with internal longitudinal reinforcing ribs at each tab between two slots, said reinforcing ribs ending at a distance from the upper end of the central pin corresponding at least to the length of the central pin of the lid. The reinforcing ribs are suitably dimensioned so that the central pin of the lid is in contact with the upper end of the reinforcing ribs when the lid of the case is in its closed position.

According to the execution, each reinforcing rib is suitably provided with a downwardly enlarging wedge shaped foot portion having a height extending from the bottom of the container part to a level of the bottom ends of the slots. Said level is intended to determine a minimum number of CD discs which can be stored securely anchored to the case without being able to move along the length of the central pin. According to a preferred embodiment the box is dimensioned to receive at least 5 and not more than 12 CD discs, but also other alternatives are possible.

In order to offer the CD discs further protection the container part can be provided with arched support elements having a height similar to that of the container part, which elements are arranged to be in sideward contact with the periphery of the CD discs. These support elements ensure that the CD discs will not be damaged if the lid or bottom of the case is exposed to a compressive load.

In the following the invention will be described in more detail with reference to the enclosed drawing, wherein
Fig. 1 shows a perspective view of an example of a case according to the invention in open position,
Fig. 2 shows a detail view of the central pin of the case shown in Fig. 1, partly cut,
Fig. 3 shows the central pin partly cut when the case is in closed position,
Fig. 4 shows the case in closed position, partly cut and partly filled with CD discs,
Fig. 5 shows the case completely filled with CD discs, and
Fig. 6 shows the case in a quite open position with lid, bottom and intermediate side wall in the same plane.

The embodiment shown in the drawing of a case according to the invention intended to receive a variable number of CD discs comprises a container part 1 and lid 2 pivotally connected to said container part.1. Centrally from the bottom in the container part 1 extends a tubular central pin 3 intended to match into the central hole of the CD discs. The container part 1 and the central pin 3 have substantially the same height, said height being adapted to a maximum number of discs.

In order to be able to store and transport a variable number of CD discs in a locked position in the case in such a way that the CD discs cannot not be freely displaced along the central pin 3, the central pin 3 according to the invention is slotted with longitudinal slots 4 extending to a previously determined depth a1 above the bottom of the container part1. The upper end portion of the central pin 3 is provided with a downwards from the end of said pin 3 conically decreasing inner diameter. A cylindrical second central pin 5 pin is arranged centrally at the inside of the lid 2, said second pin 5 having an outer diameter corresponding to the inner diameter at the upper end of the tubular central pin 3. On closing the lid the second central pin 5 in intended to squeeze into the central pin 3 of the bottom part 1 and thereby to cause a radial expansion of said central pin 3 resulting in locking of the CD discs, as soon as the height of the pile of CD discs in the case exceeds the distance a1, i.e. the uppermost CD disc in the pile lies at least at the level of the slots 4 in the central pin 3.

The case is produced in one piece, by injection moulding having one side wall 8 pivotally joined both to the lid 2 and to the bottom of the container part 1, whereby said bottom, side wall 8 and lid 2 can be positioned into a common plane, when the case is in open position, in which position the case also is produced in a mould.

The joint 8a between the lid 2 and the side wall 8 as well as the joint 8b between the bottom of the container part 1 and the side wall 8 are provided with a V shaped groove at the inner side of the case, having a depth somewhat smaller than the wall thickness of the case. Due to this the theoretical pivot axle in each joint 8a, 8b is positioned outermost in a corresponding edge of the case.

The above mentioned construction of the joints the case makes the case suitable for IML labelling, whereby the lid 2, the bottom and the intermediate side wall 8 of the case is provided with a common label which is moulded into the plastics material of the case during the injection moulding of the case.

In order to prevent an unintentional opening of the case the container part 1 and the lid 2 are provided with mutually cooperating snap-in locks 10a, 10b near those two corners positioned away from the pivotal side wall 8. The snap-in locks 10a and 10b have a shape preventing both unintentional opening of the lid 2 and displacement of the lid 2 along the container part 1.

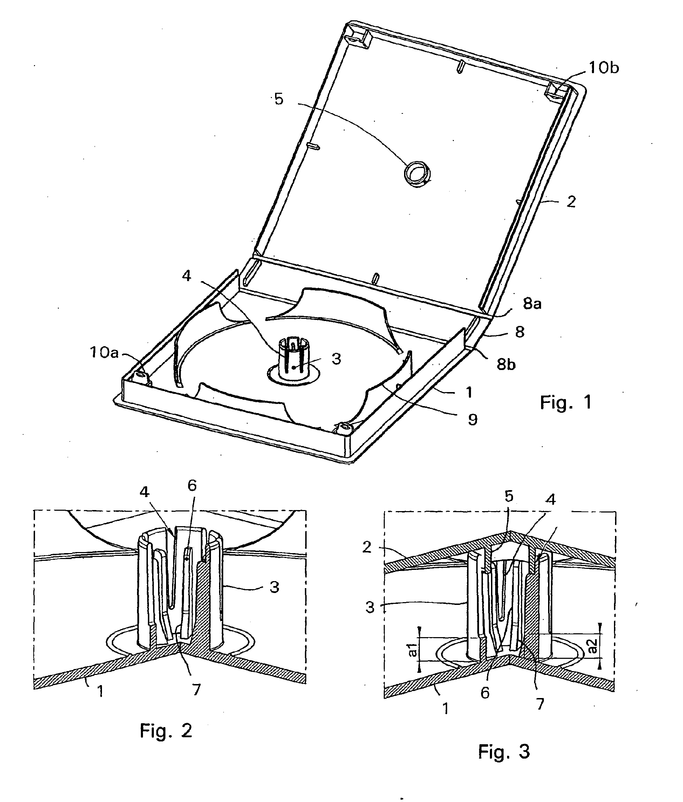

The tubular central pin 3 is provided with an internal longitudinal reinforcement rib 6 at each tab between two slots 4, giving the central pin 3 stability. The reinforcing ribs 6 ends at a distance from the upper en of the central pin 3 corresponding at least to the length of the upper central pin 5, in order to leave space to said upper central pin 5, when the lid 2 is in closed position, as will appear from fig. 3 to 5.

Each reinforcing rib 6 is provided with a downwardly enlarging wedge shaped foot portion 7 having a height a2 extending from the bottom of the container part 1 to the level of the bottom end of slots 4.

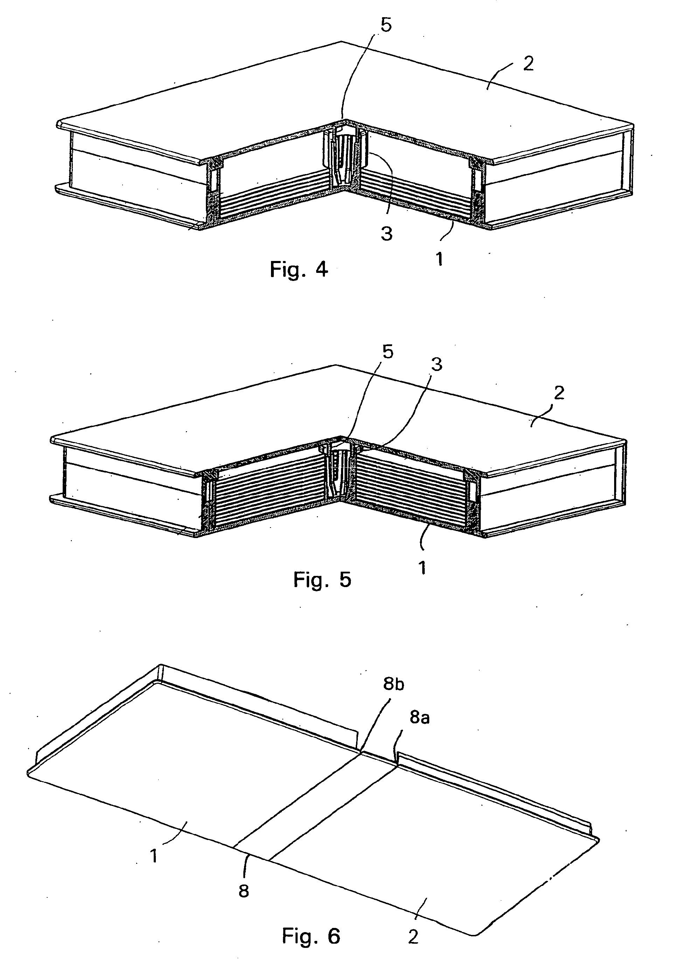

The distance a1 up to the level of the bottom end of the slots 4 and simultaneously the level of the upper ends of the foot portions 7 defines the smallest number of CD discs which can be kept in a locked position in the case when the lid 2 is closed. In Fig. 4 the case is shown filled with five CD discs, which in the shown embodiment is the minimum number of CD discs which can be kept in a locked position. Fig. 5 shows the case, when it is filled with a maximum number of CD discs, in the shown case twelve.

The container part 1 is further provided with arched support elements 9 extending from the bottom and arranged to be in contact with the periphery of the CD discs. These support elements 9 positioned as a circle surrounding the on CD discs, are spaced from each others in order to enable gripping the CD discs stored in the case. The number of support elements 9 is suitably four and they are positioned centrally within a side wall of its own in the container part 1. The support elements 9 have preferably a height corresponding to the height of the container part 1. These support elements ensure that the CD discs will not be damaged if the lid 2 or the bottom of the case would be exposed to a compressive load.

## Claims

1. A case for a variable amount of CD, DVD or similar discs, comprising a container part (1) provided with an articulately connected lid (2) and having a central pin (3) extending upwardly from the bottom of the container part (1), said central pin (3) being intended to match into the central hole of the CD discs, said container part (1) and central pin (3) having a height adapted to a previously determined maximum number of CD discs, whereby the central pin (3) of the container part (1) is provided with a central cavity extending along the entire length of said central pin (3), and the inside of the lid (2) is provided with an upper central pin (5) intended to squeeze into the central cavity in the central pin (3) of the container part (1) on closing the lid (2) and thereby to cause a radial expansion of said central pin (3) due to cooperation between the shape of the cavity in the central pin (3) of the container part (1) and the shape of the mantle surface of the upper central pin (5), **characterized in that** the case is an injection moulded one piece case having one side wall (8) pivotally hinged to both the lid (2) and to the bottom of the container part (1), whereby said bottom, side wall (8) and lid (2) can be positioned into a common plane when the case is in its open position, and that central pin (3) of the container part (1) is slotted by longitudinal slots (4) extending to a previously determined depth (a1) above the bottom of the container part (1), whereby each tab between two slots (4) is provided with internal longitudinal reinforcing ribs (6), said reinforcing ribs (6) ending at a distance from the upper end of the central pin (3) corresponding at least to the length of the upper central pin (5) and each reinforcing rib (6) is provided with a downwardly enlarging wedge shaped foot portion (7) having a height (a2) extending from the bottom of the container part (1) to a level of the bottom ends of the slots (4).

2. Case according to claim 1, **characterized in that** the joints (8a, 8b) between the lid (2) and the side wall (8), and between the bottom of the container part (1) and the side wall (8) are provided with a V shaped groove at the inside of the case having a depth which is somewhat smaller than the wall thickness of the case.

3. Case according to claim 2, **characterized in that** the outside of the case, i.e. the lid (2), the pivotal intermediate side wall (8), and the bottom of the case are provided with an In-Mould-Labelling fixed label.

4. Case according to claim 2, **characterized in that** the outside of the case is provided with a glued label.

5. Case according to claim 1, **characterized in that** central pin (3) of the container part (1) is tubular having a circular, a polygonal or an astral cross section.

6. Case according to claim 5, **characterized in that** the internal diameter at the end of the central pin (3) of the container part (1) and the outer diameter at the end of the upper central pin (5) are substantially of equal size, whereby either the inner diameter in the upper end portion of the central pin (3) of the container part or the outer diameter of the upper central pin (5) is constant while the diameter in the cooperating central pin (3, 5) increases conically from the end upwards and decreases conically downwards, respectively.

7. Case according to claim 1, **characterized in that** the level of the bottom ends of the slots (4) and of the upper ends of the foot portions (7) define the minimum number of CD discs which can be kept in a locked position in the case.

8. Case according to claim 7, **characterized in that** it is dimensioned for 5 to 12 CD discs.

9. Case according to claim 1, **characterized in that** container part (1) is provided with arched support elements (9) having a height similar to that of the container part (1), which elements are arranged to be in sideward contact with the periphery of the CD discs.

10. Case according to claim 7 or 8, **characterized in that** the container part (1) and the lid (2) are provided with mutually cooperating snap-in locks (10a, 10b) at the front side of the case.

## Patentansprüche

1. Hülle für eine variable Menge von CDs, DVDs oder ähnlichen Platten, umfassend ein Behälterteil (1), das mit einem gelenkig verbundenen Deckel (2) versehen ist und einen sich von dem Boden des Behälterteils (1) aufwärts erstreckenden zentralen Stift (3) aufweist, wobei vorgesehen ist, dass der zentrale Stift (3) in das zentrale Loch der CD-Platten hineinpasst, wobei das Behälterteil (1) und der zentrale Stift (3) eine Höhe aufweisen, die an eine vorgegebene Menge von CD-Platten angepasst ist, wobei der zentrale Stift (3) des Behälterteils (1) mit einer sich über die gesamte Länge des zentralen Stifts (3) erstreckenden zentralen Ausnehmung versehen ist, und die Innenseite des Deckels (2) mit einem oberen zentralen Stift (5) versehen ist, wobei vorgesehen ist, dass dieser in die zentrale Ausnehmung des zentralen Stift (3) des Behälterteils (1) hineinpaßt, wenn der Deckel (2) verchlossen wird, und **dadurch** aufgrund des Zusammenwirkens zwischen der Form der Ausnehmung in dem zentralen Stift (3) des Behälterteils (1) und der Form der Mantelfläche des oberen zentralen Stifts (5) eine radiale Ausweitung des zentralen Stifts (3) bewirkt, **dadurch gekennzeichnet, dass** die Hülle eine spritzgegossene einstückige Hülle ist, deren eine Seitenwand (8) sowohl zu dem Deckel (2) als auch zu dem Boden des Behälterteils (1) schwenkbar eingehängt ist, wobei der Boden, die Seitenwand (8) und der Deckel (2) auf einer Ebene positioniert sein können, wenn die Hülle sich in ihrer offenen Position befindet, und dass der zentrale Stift (3) des Behälterteils (1) durch längliche Schlitze (4) versehen ist, die sich zu einer vorgegebenen Tiefe (a1) oberhalb des Bodens des Behälterteils (1) erstrecken, wobei jeder Streifen zwischen zwei Schlitzen (4) mit inneren länglichen Verstärkungsrippen (6) versehen ist, wobei die Verstärkungsrippen (6) in einem Abstand von dem oberen Ende des zentralen Stifts (3) enden, der zumindest der Länge des oberen zentralen Stifts (5) entspricht, und jede Verstärkungsrippe (6) mit einem sich abwärts erweiternden keilförmigen Fußabschnitt (7) versehen sich, deren Höhe (a2) sich von dem Boden des Behälterteils (1) bis zu der Ebene der unteren Enden der Schlitze (4) erstreckt.

2. Hülle nach Anspruch 1, **dadurch gekennzeichnet, dass** die Verbindungsstellen (8a, 8b) zwischen dem Deckel (2) und der Seitenwand (8), und zwischen dem Boden des Behälterteils (1) und der Seitenwand (8) an der Innenseite der Hülle mit einer V-förmigen Nut versehen sind, deren Tiefe etwas kleiner is als die Wandstärke der Hülle.

3. Hülle nach Anspruch 2, **dadurch** gekennzeichet, dass die Außenseite der Hülle, d.h. der Deckel (2), der schwenkbare Zwischenseitenwand (8) und der Boden der Hülle mit einem durch In-Mould-Labelling befestigten Etikett versehen sind.

4. Hülle nach Anspruch 2, **dadurch gekennzeichnet, dass** die Außenseite der Hülle mit einem aufgeklebten Etikett versehen ist.

5. Hülle nach Anspruch 1, **dadurch gekennzeichnet, dass** der zentrale Stift (3) des Behälterteils (1) die Form eines Rohres mit einem kreisförmige, polygonalen oder sternförmigen Querschnitt hat.

6. Hülle nach Anspruch 5, **dadurch gekennzeichnet, dass** der Innendurchmesser am Ende des zentrale Stifts (3) des Behälterteils (1) und der Außendurchmesser am Ende des oberen zentralen Stifts (5) im wesentlichen von gleicher Größe sind, wobei entweder der Innendurchmesser im obereren Endabschnitt des zentralen Stifts (3) des Behälterteils (1) oder der Außendurchmesser des oberen zentralen Stifts (5) konstant ist, während der Durchmesser des jeweils mit diesem zusammenwirkenden zentralen Stiftes (3, 5) von dem Ende konisch aufwärts zunimmt, beziehungsweise konisch abwärts abnimmt.

7. Hülle nach Anspruch 1, **dadurch gekennzeichnet, dass** die Ebene der unteren Enden der Schlitze (4) und der oberen Enden der Fußabschnitte (7) die Mindestmenge der CD-Platten definiert, die in der Hülle in ihrer verschlossenen Position gehaltenen werden können.

8. Hülle nach Anspruch 7, **dadurch gekennzeichnet, dass** diese für 5 bis 12 CDs dimensioniert ist.

9. Hülle nach Anspruch 1, **dadurch gekennzeichnet, dass** das Behälterteil (1) mit bogenförmigen Stützelementen (9) versehen ist, deren Höhe der des Behälterteils (1) entspricht, welche Elemente so angeordnet sind, dass sie mit dem Umfang der CD-Platten in seitlichem Kontakt stehen.

10. Hülle nach Anspruch 7 oder 8, **dadurch gekennzeichnet, dass** das Behälterteil (1) und der Deckel (2) an der Vorderseite der Hülle mit zusammenwirkenden Schnappschlössern versehen sind.

## Revendications

1. Boîtier destiné à recevoir une quantité variable de CD, DVD ou disques similaires, comprenant une partie de conteneur (1) comportant un couvercle couplé de manière articulée (2) et présentant une broche centrale (3) s'étendant vers le haut à partir du fond de la partie de conteneur (1), ladite broche centrale (3) étant destinée à s'assembler dans l'orifice central des disques CD, lesdites partie de conteneur (1) et broche centrale (3) présentant une hauteur adaptée à un nombre maximum déterminé préalablement de disques CD, de telle sorte que la broche centrale (3) de la partie de conteneur (1) comporte une cavité centrale s'étendant suivant la totalité de la longueur de ladite broche centrale (3), et l'intérieur du couvercle (2) comporte une broche centrale supérieure (5) destinée à presser à l'intérieur de la cavité centrale sur la broche centrale (3) de la partie de conteneur (1) lors de la fermeture du couvercle (2) et à provoquer ainsi une expansion radiale de ladite broche centrale (3) du fait de la coopération entre la forme de la cavité dans la broche centrale (3) de la partie de conteneur (1) et la forme de la surface de manchon de la broche centrale supérieure (5), **caractérisé en ce que** le boîtier est un boîtier en une pièce moulé par injection comportant une paroi latérale (8) articulée de manière à pouvoir pivoter à la fois sur le couvercle (2) et sur le fond du conteneur (1), de telle sorte que lesdits fond, paroi latérale (8) et couvercle (2) peuvent être placés dans un plan commun lorsque le boîtier est dans sa position ouverte, et **en ce que** la broche centrale (3) de la partie de conteneur (1) est fendue avec des fentes longitudinales (4) s'étendant à une profondeur déterminée préalablement (a1) au-dessus du fond de la partie de conteneur (1), de telle sorte que chaque patte entre deux fentes (4) comporte des nervures de renforcement longitudinales internes (6), lesdites nervures de renforcement (6) se terminant à une certaine distance de l'extrémité supérieure de la broche centrale (3) correspondant au moins à la longueur de la broche centrale supérieure (5) et chaque nervure de renforcement (6) comporte une partie de pied en forme de coin s'élargissant vers le bas (7) présentant une hauteur (a2) s'étendant à partir du fond de la partie de conteneur (1) jusqu'à un niveau des extrémités inférieures des fentes (4).

2. Boîtier selon la revendication 1, **caractérisé en ce que** les joints (8a, 8b) entre le couvercle (2) et la paroi latérale (8), et entre le fond de la partie de conteneur (1) et la paroi latérale (8) comportent une rainure en forme de V au niveau de la face interne du boîtier présentant une profondeur qui est légèrement inférieure à l'épaisseur de paroi du boîtier.

3. Boîtier selon la revendication 2, **caractérisé en ce que** la face externe du boîtier, c'est-à-dire, le couvercle (2), la paroi latérale intermédiaire pivotante (8), et le fond du boîtier, comporte une étiquette fixe de marquage intergrée au moule.

4. Boîtier selon la revendication 2, **caractérisé en ce que** la face externe du boîtier comporte une étiquette collée.

5. Boîtier selon la revendication 1, **caractérisé en ce que** la broche centrale (3) de la partie de conteneur (1) est tubulaire, présentant une section transversale circulaire, polygonale ou astrale.

6. Boîtier selon la revendication 5, **caractérisé en ce que** le diamètre interne à l'extrémité de la broche centrale (3) de la partie de conteneur (1) et le diamètre externe e à l'extrémité de la broche centrale supérieure (5) sont de dimension sensiblement égale, de telle sorte que soit le diamètre interne sur la partie d'extrémité supérieure de la broche centrale (3) de la partie de conteneur soit le diamètre externe de la broche centrale supérieure (5) est constant alors que le diamètre de la broche centrale coopérante (3, 5) augmente de manière conique à partir de l'extrémité vers le haut et diminue respectivement de manière conique vers le bas.

7. Boîtier selon la revendication 1, **caractérisé en ce que** le niveau des extrémités inférieures des fentes (4) et celui des extrémités supérieures des parties de pied (7) définissent le nombre minimum de disques CD qui peuvent être maintenus dans une position verrouillée dans ce boîtier.

8. Boîtier selon la revendication 7, **caractérisé en ce qu'**il est dimensionné pour 5 à 12 disques CD.

9. Boîtier selon la revendication 1, **caractérisé en ce que** la partie de conteneur (1) comporte des éléments de support courbés (9) présentant une hauteur similaire à celle de la partie de conteneur (1), lesquels éléments sont agencés de manière à être en contact latéral avec la périphérie des disques CD.

10. Boîtier selon la revendication 7 ou 8, **caractérisé en ce que** la partie de conteneur (1) et le couvercle (2) comportent des éléments de verrouillage à remboîtement coopérant mutuellement (10a, 10b) sur la face avant du boîtier.
